# EUROPEAN PATENT APPLICATION

(11) **EP 2 626 963 A1**
(43) Date of publication of application: **14.08.2013**
(21) Application number: 13000636.4
(22) Date of filing: 07.02.2013
(51) Int. Cl.: H02G 11/00, F16G 13/16

(54) **Cable or pipe support chain**

(30) Priority: 13.02.2012 IT BG20120008
(71) Applicant: DAV S.P.A., 20017 Passirana di Rho (MI) (IT)
(72) Inventor: Vavassori, Stefano, 20017 RHO (MI) (IT)
(74) Representative: Gatti, Enrico

(57) **Abstract**

A cable or pipe support chain comprising: a plurality of links (10) comprising at least one pair of lateral profiles (11); at least one pair of crosspieces (12, 13) which join together said at least one pair of lateral profiles (11); each of said at least one pair of profiles (11) presenting a female end (14) and a male end (15) which are mutually complementary; joining means (30, 46) for connecting a female end (14) of a link (10) to the corresponding male end (15) of the adjacent link (10) to enable partial relative rotation between said female end (14) and said male end (15); characterised in that said female end (14) comprises a first through hole (20, 43) having a substantially circular central portion (21, 44) from which at least two arms (22, 45) of substantially parallelogram shape extend diametrically opposite each other; said first through hole (20, 43) being positioned in a first predefined position; said male end (15) comprising a second through hole (25, 40) having a substantially circular central portion (26, 41) from which at least two arms (27, 42) of substantially circular sector shape extend diametrically opposite each other; said second through hole (25, 40) being positioned in a second predefined position rotated through a predefined angle relative to said first position; said joining means (30, 46) comprising a central part (33, 49) passing through said first through hole (20, 43) and through said second through hole (25, 40); said central part (33, 49) having a sectional shape substantially identical to that of said first hole (20, 43).

## Description

The present invention relates to a cable or pipe support chain.

So-called cable or pipe support chains are known, their purpose being to protect or contain for example flexible pipes for the passage of compressed air, oil or other pressurized fluids, or electric cables which power moving machine parts such as machine tool saddles, slides, cranes or processing machines.

Cable support chains generally consist of a plurality of links, each link presenting a male end and a female end. The links are connected together by one or more pins positioned at one end and able to slide within slots at the other end to maintain the male end of a link rigid with the female end of the next link, while in the meantime each link is able to rotate relative to the adjacent link through a range defined by the length of the slots.

The connection between two successive links also requires the use of closure plates for supporting the pins and relative fixing bolts.

The documents US 3,848,407, DE 103 43 263, EP 124 457 and US 5,247,961 describe cable support chains of the aforedescribed type.

An object of the present invention is therefore to provide a cable or pipe support chain which uses a smaller number of connection pieces between two successive links.

Another object of the present invention is to provide a more compact cable or pipe support chain which for equal external dimensions of the chain has an internal passage space for cables and pipes which is greater than known chains, because of the fact that the sizes of the connection elements are smaller.

Another object of the present invention is to provide a cable or pipe support chain which can be produced at lesser cost than the aforedescribed chains of known type and be mounted more quickly.

A further object of the present invention is to provide a cable or pipe support chain which is structurally more robust than the aforedescribed chains of known type. These and other objects are attained according to the present invention by a cable or pipe support chain comprising: a plurality of links comprising at least one pair of lateral profiles; at least one pair of crosspieces which join together said at least one pair of lateral profiles; each of said at least one pair of profiles presenting a female end and a male end which are mutually complementary; joining means for connecting a female end of a link to the corresponding male end of the adjacent link to enable partial relative rotation between said female end and said male end; **characterised in that** said female end comprises a first through hole having a substantially circular central portion from which at least two arms of substantially parallelogram shape extend diametrically opposite each other; said first through hole being positioned in a first predefined position; said male end comprising a second through hole having a substantially circular central portion from which at least two arms of substantially circular sector shape extend diametrically opposite each other; said second through hole being positioned in a second predefined position rotated through a predefined angle relative to said first position; said joining means comprising a central part passing through said first through hole and through said second through hole; said central part having a sectional shape substantially identical to that of said first hole.

Further characteristics of the invention are described in the dependent claims.

The characteristics and advantages of the present invention will be apparent from the following detailed description of one embodiment thereof illustrated by way of non-limiting example in the accompanying drawings, in which:

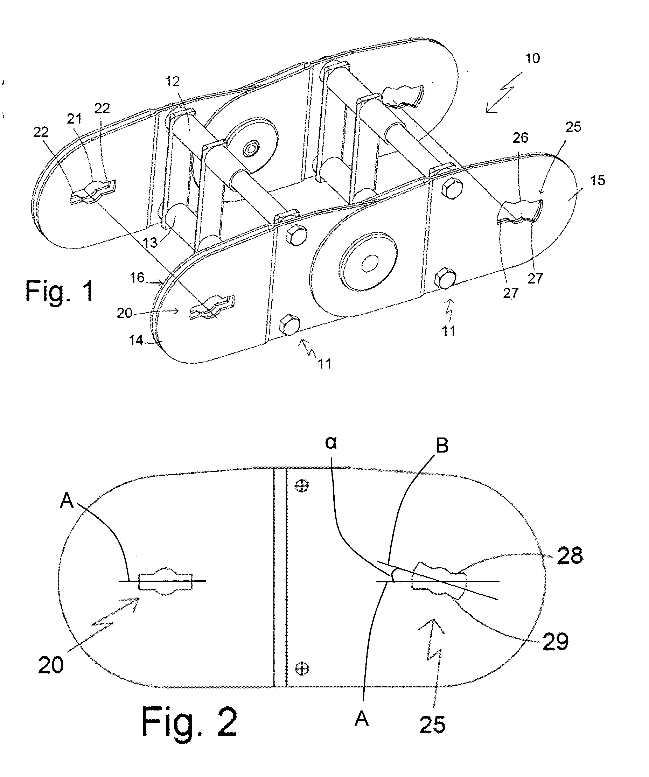

Figure 1 is a perspective view of a portion of cable or pipe support chain in accordance with a first embodiment of the present invention;
Figure 2 is a front view of a link of the chain of Figure 1 in accordance with the present invention;
Figure 3 is a perspective view of a hinge pin of the chain of Figure 1 in accordance with the present invention;
Figure 4 is a perspective view of a hinge pin of the chain of Figure 1 in accordance with a variant of the present invention;

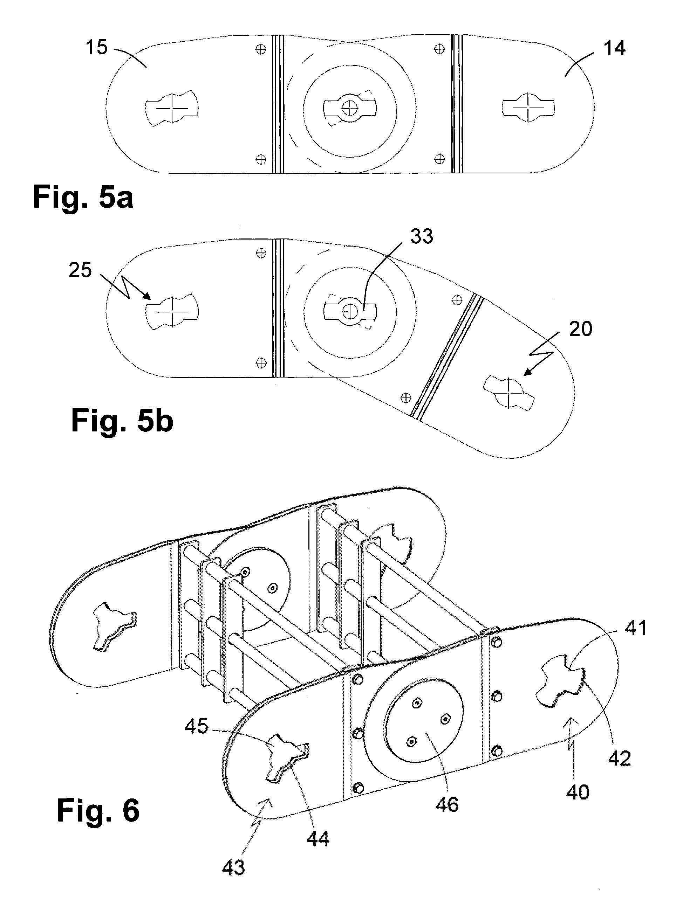

Figures 5a and 5b are front views of a pair of links of the chain of Figure 1, shown straight and rotated respectively, in accordance with the present invention;
Figure 6 is a perspective view of a portion of cable or pipe support chain in accordance with a second embodiment of the present invention;

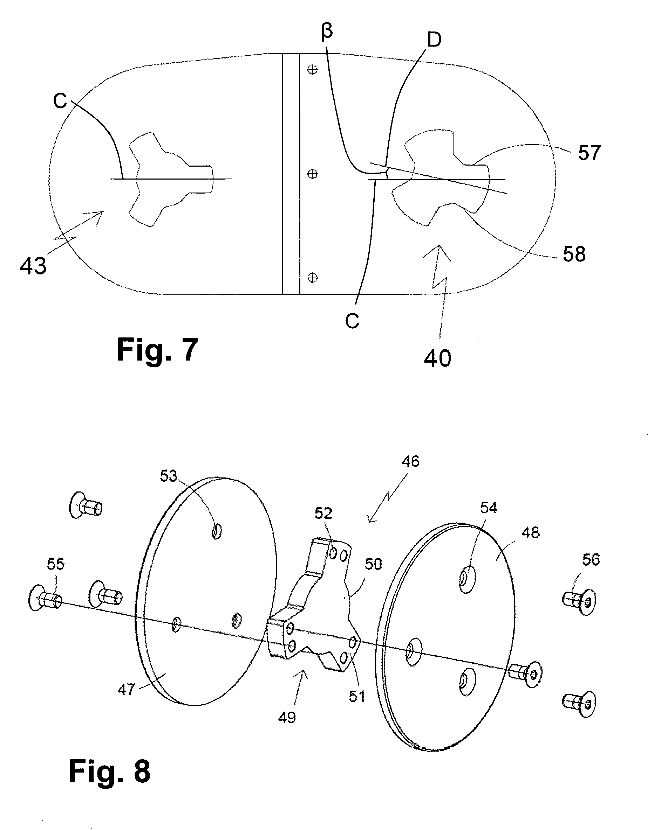

Figure 7 is a front view of a link of the chain of Figure 6 in accordance with the present invention;
Figure 8 is a perspective view of a hinge pin of the chain of Figure 6 in accordance with the present invention;

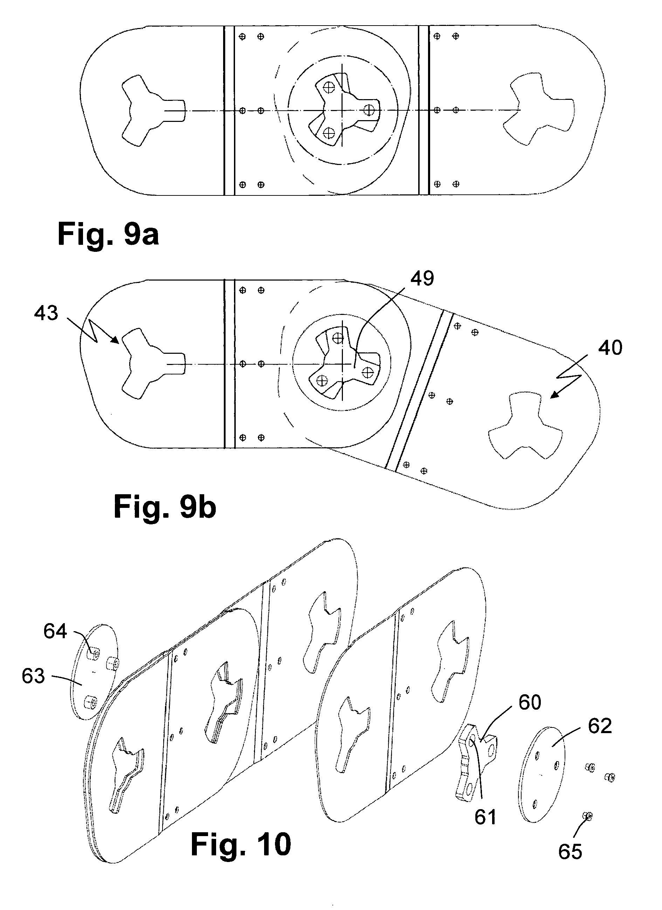

Figures 9a and 9b are front views of a pair of links of the chain of Figure 6, shown straight and rotated respectively, in accordance with the present invention;
Figure 10 is an exploded view of a pair of connected links in accordance with a variant of the present invention.

With reference to the accompanying figures, a cable or pipe support chain, in accordance with a first embodiment of the present invention, comprises a plurality of links 10. Each link 10 comprises a pair of shaped lateral profiles 11, made rigid with each other by a pair of crosspieces, namely upper 12 and lower 13, respectively.

A profile 11, which seen laterally is of substantially squashed oval shape, i.e. having two virtually straight sides connected by two semicircles, is divided into two parts, with one semicircle corresponding to a female end 14 and one semicircle corresponding to a male end 15. The female end 14 is formed from two parallel strips spaced apart to form a slot or fork 16 to receive the male end 15 of the adjacent link.

The profile 11 can be formed from two metal or plastic (nylon) sheets, each of which has the female end 14 out of alignment with the male end 15, such that when the two sheets are joined together the fork 16 is formed. The two sheets are joined together by screws fixed to the crosspieces 12 and 13, or otherwise by gluing or welding. Alternatively they can be produced from a single piece in which a recess is formed to create the fork 16.

The female end 14 centrally comprises a through hole 20 on both sides of the fork 16. The shape of the hole 20 is in the first instance a horizontally elongated parallelogram and in particular has a substantially circular central portion 21 from which two arms of substantially rectangular or parallelogram shape extend diametrically opposite each other, and disposed longitudinally (horizontally) to the profile 11. Alternatively they can be positioned transversely (vertically) to the profile 11, or in any other angular arrangement.

The through hole 20 is located in a first predefined position, or rather the through hole 20 has a longitudinal axis A which, as shown in the figures, lies parallel to the longitudinal axis of the pair of lateral profiles 11.

The male end 15 comprises centrally a through hole 25, of shape and size similar to that of the hole 20, and having a substantially circular central portion 26 substantially of the same size as the central portion 21, from which two arms 27 of substantially fan or circular sector shape extend diametrically opposite each other. In particular, each fan presents an angle α at its centre preferably of 20°, and between 0° and 45°, depending on the radius of the chain to be obtained. The arrangement of the two arms 27 must be the same as the arms 22. For example, as in the accompanying figures, the holes 20 and 25 are disposed substantially horizontal.

Each of the two arms 27 has a side 28 positioned horizontally, and aligned with a side of the arms 2 of the hole 20, which with the other side 29 forms an angle α at its centre preferably of 20°, and variable preferably between 0° and 45°, depending on the radius of the chain to be obtained.

The through hole 25 is located in a second predefined position, or rather the through hole 25 has a longitudinal axis B inclined by a prefixed angle α to the axis A and, as shown in the figures, to the longitudinal axis of the pair of lateral profiles 11.

The connection between the male end 15 and the female end 14 of an adjacent link is made by inserting the male end 15 into the fork 16.

A pin 30 locks the two links together but in such a manner that one can rotate relative to the other through a predetermined angle, in the downward direction (or upward through a minimum extent in the case of chains with counter-radius), about a connection axis between the two links.

In one embodiment, the pin 30 comprises a preferably circular flange 31 on which a block 33 is fixed (microfusion) having the same sectional shape as the through hole 20 and slightly reduced dimensions in that the block 33 has to be able to enter the hole 20. The block 33 has a shape which enables it to enter the hole 25 and can assume several positions therein, being able to rotate through an angle α within its interior.

The height (thickness) of the block 33 is substantially equal to the distance between the two external surfaces of the fork 16. The block 33 has therefore a substantially cylindrical central portion from which two portions extend diametrically opposite each other, of substantially parallelepiped shape.

A threaded hole 34 is provided at the centre of the block 33. The pin 30 also comprises anther flange 32 having at its centre a hole 35. A screw 36 enters the hole 35 and is screwed into the thread of the hole 34.

The two flanges 31 and 32 are positioned one on each side on the female end 14, after inserting the male end 15 of the adjacent link into the fork 16. These are positioned such that the block 33 comes into contact with the flange 32, and are fixed together by the screw 36.

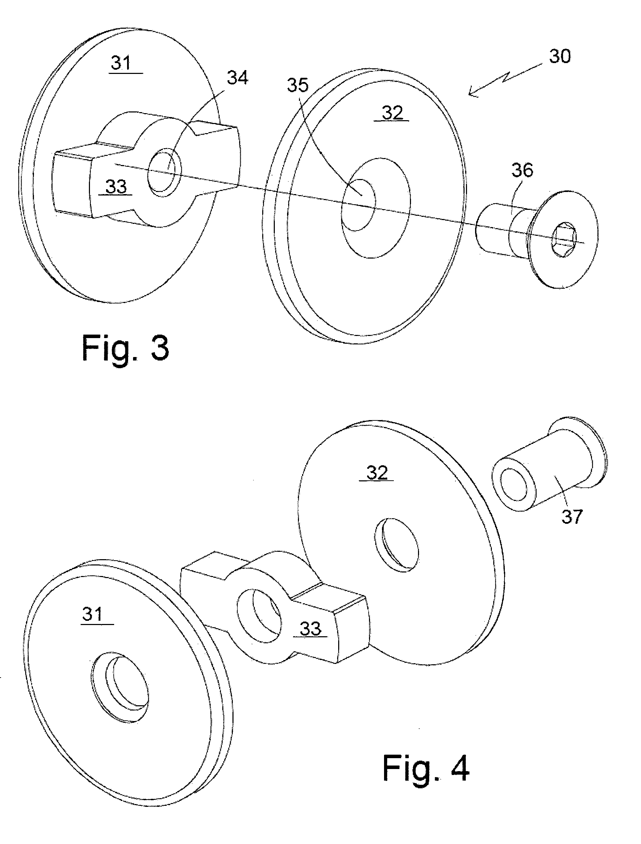

In an alternative embodiment, shown in Figure 4, the block 33 is separated from the flange 31, the connection between the two flanges 31 and 32 and the block 33 being made by a rivet 37. The rivet 37 can also be internally threaded and fixed by a screw from the opposite side. The block 33 remains locked in the respective holes present in the two sides of the fork 16, while the male end 15 is able to rotate, as far as is possible, about the block 33, hence enabling the male end 15 to (partially) rotate within the fork 16. If the angle α at the centre of the fans of the through hole 25 is equal to 20°, the male end 15 can rotate from 0° to 20° downwards. It cannot rotate upwards as the side 28 strikes horizontally (based on the arrangement shown in the figures) against the corresponding horizontal side of the hole 20, while the space given by the fan shape of the arms 27 enables the male end 15 of the profile 11 to move downwards until the side 29 of the arm 27 abuts against the lateral surface of the block 33.

The block 33 can also be formed separate from the flange 31. In this case the connection is preferably made by crimping or by orbital riveting.

In an alternative embodiment of the profile 11, the holes 20 and 25 can assume a clover shape. Both the hole at the male end and at the female end are trilobate instead of bilobate.

In particular, the through hole 43 at the female end has a substantially circular central portion 44 from which three arms 45 of substantially rectangular shape extend, disposed at 120° apart.

The through hole 40 at the male end has a substantially circular central portion 41 from which three arms 42 of substantially fan or circular sector shape extend, disposed at 120° apart. In particular, each fan presents an angle β at its centre preferably of 20°, and variable between 0° and 45°, depending on the chain radius of curvature, understood as the radius of the circumference passing through the centres 43, 49 and 40. Each of the three arms 45 has a side aligned with a side of the arms 42 of the hole 40, which with the other side 58 forms an angle β at its centre preferably of 20°, and variable between 0° and 45°, depending on the chain radius of curvature.

The through hole 40 is located in a first predefined position, on an axis C which passes through the centre of one of the three arms 42, and for example lies parallel to the longitudinal axis of the pair of lateral profiles 11.

The through hole 43 is located in a second predefined position, on an axis D which passes through the centre of one of the three arms 42, this axis D being inclined at a predetermined angle β to the axis C, and to the longitudinal axis of the pair of lateral profiles 11.

A pin 46 locks the two links together but in such a manner that one can rotate relative to the other through a predetermined angle β, in the downward direction, about a connection axis between the two links.

The pin 46 presents two flanges 47 and 48, and a block 49 which has a substantially circular central portion 50 from which three arms 51 of substantially rectangular shape extend, disposed at 120° apart, in the manner of the hole 40.

The block 49 has a shape identical to the shape of the hole 43, and dimensions such that the block 49 can enter the hole 43 and be locked in position.

The block 49 has a shape which enables it to enter the hole 40 and assume several positions within it, it being able to rotate through an angle of β in its interior.

At each end of the three arms 51, the block 49 presents a pair of threaded holes 52. The flanges 47 and 48 each have three holes 53 and 54 respectively. The three holes 53 in the flange 47 are aligned with one of the pair of holes 52, the three holes 54 in the flange 48 being aligned with the other of the pair of holes 52. Three screws 55 fix the flange 47 to the block 49, and three screws 56 fix the flange 48 to the block 49.

The two flanges 47 and 48 are positioned one on each side on the female end 14, after inserting the male end 15 of the adjacent link into the fork 16. These are positioned such that the block 49 comes into contact with the flanges 47 and 48, and are fixed together by screws 55 and 56. The pin 46 can also be fixed as in the previous case with the presence of a central hole.

In an alternative form of fixing, a trilobite block 60 is used with a single hole 61 for each lobe, and a flange 62 having three holes, on one side. On the other side another flange 63 comprises three holes to which three (female) threaded pins 64 are applied (by screwing or riveting). The pin 64 of the flange 63 enters the hole 61 of the block 60. Three screws 65 pass through the holes of the flange 62 and the holes 61, and are screwed into the pins 64 to fix the link.

The male end 15 can rotate downwards, as far as is possible, about the block 49, so enabling the male end 15 to (partially) rotate into the fork 16. It cannot rotate upwards as the side 57 of each of the three arms 45 hits against the corresponding side of the hole 40, while the space given by the fan shape of the arms 45 enables the male end 15 of the profile 11 to move downwards until the side 58 of the arm 45 abuts against the lateral surface of the block 49.

When the chain has been composed by fixing with the profiles 11, in accordance with the present invention, optimal stress resistance is achieved at the point of maximum rotation of a link relative to the adjacent link. The extension (length) of the arms 22, 27 and 51, and of the cooperating blocks 33, 49 and 56, defines that surface in play on which the force which these elements exert during the rotation of two adjacent profiles acts.

In this respect, the resistant forces given by the lateral surfaces of the two or three arms against the lateral walls of the holes in the female end now concur. These surfaces are particularly large, positioned on the central horizontal axis through the link and adjacent to material portions of the link which are greater than other known links, which instead are emptied by holes or arched slots, a fact which contributes to limiting the deformations of the entire link and giving it the characteristic of superior strength.

Moreover, the present invention reduces construction and assembly costs and simplifies the chain production cycle, as a smaller number of parts are used.

In practice, the materials used for the cable support chain, and the dimensions, can be chosen at will according to requirements and to the state of the art.

For small-dimension cable support chains the material can be nylon and the holes and pin can have two arms, whereas for large-dimension cable support chains the chain material is steel and the holes and pins have three arms.

The cable support chain conceived in this manner is susceptible to numerous modifications and variants, all falling within the scope of the inventive concept; moreover all details can be replaced by technically equivalent elements.

## Claims

1. A cable or pipe support chain comprising: a plurality of links (10) comprising at least one pair of lateral profiles (11); at least one pair of crosspieces (12, 13) which join together said at least one pair of lateral profiles (11); each of said at least one pair of profiles (11) presenting a female end (14) and a male end (15) which are mutually complementary; joining means (30, 46) for connecting a female end (14) of a link (10) to the corresponding male end (15) of the adjacent link (10) to enable partial relative rotation between said female end (14) and said male end (15); **characterised in that** said female end (14) comprises a first through hole (20, 43) having a substantially circular central portion (21, 44) from which at least two arms (22, 45) of substantially parallelogram shape extend diametrically opposite each other; said first through hole (20, 43) being positioned in a first predefined position; said male end (15) comprising a second through hole (25, 40) having a substantially circular central portion (26, 41) from which at least two arms (27, 42) of substantially circular sector shape extend diametrically opposite each other; said second through hole (25, 40) being positioned in a second predefined position rotated through a predefined angle relative to said first position; said joining means (30, 46) comprising a central part (33, 49) passing through said first through hole (20, 43) and through said second through hole (25, 40); said central part (33, 49) having a sectional shape substantially identical to that of said first hole (20, 43).

2. A chain as claimed in claim 1, **characterised in that** said first through hole (20, 43) has a first longitudinal axis (A, C), said second through hole (25, 40) having a second longitudinal axis (B, D) inclined by a predefined angle to said first axis.

3. A chain as claimed in one of the preceding claims, **characterised in that** said predefined angle is between 0° and 45°, variable as a function of the chain radius of curvature.

4. A chain as claimed in one of the preceding claims, **characterised in that** said female end (14) is constructed such as to form a fork (16) into which the corresponding male end (15) of the adjacent link (10) is inserted.

5. A chain as claimed in one of the preceding claims, **characterised in that** said central part (33, 49) is fixed to a pair of flanges (31, 32, 47, 48) located externally to said female end (14).

6. A chain as claimed in one of the preceding claims, **characterised in that** said central part (33, 49) is fixed to a pair of flanges (31, 32, 47, 48) by screws or rivets.

7. A chain as claimed in one of the preceding claims, **characterised in that** said first hole (43) comprises a substantially circular central portion (44) from which three arms (45) of substantially rectangular shape extend, disposed at 120° to each other.

8. A chain as claimed in one of the preceding claims, **characterised in that** said second hole (40) comprises a substantially circular central portion (41) from which three arms (42) of substantially circular sector shape extend, disposed at 120° to each other.

9. A chain as claimed in one of the preceding claims, **characterised in that** said joining means (46) comprise, contained between two lateral flanges (47, 48), a central pin (49) having a central part with a substantially circular central portion from which three arms (51) of substantially rectangular shape extend, disposed 120° apart.

10. A chain as claimed in one of the preceding claims, **characterised in that** two holes (52) are provided at the end of each of said at least two arms (22, 45) for fixing said central part (49) to a pair of flanges (47, 48) positioned externally to said female end (14).
